# EUROPÄISCHE PATENTSCHRIFT

(11) **EP 4 424 557 B1**
(45) Veröffentlichungstag und Bekanntmachung des Hinweises auf die Patenterteilung: **08.04.2026**
(21) Anmeldenummer: 24160756.3
(22) Anmeldetag: 01.03.2024
(51) Int. Cl.: B60P 3/035, B65H 49/38

(54) **TRANSPORTVORRICHTUNG UND SCHWERLASTFAHRZEUG, UMFASSEND EINE DERARTIGE TRANSPORTVORRICHTUNG**
TRANSPORT DEVICE AND HEAVY GOODS VEHICLE COMPRISING SUCH A TRANSPORT DEVICE
DISPOSITIF DE TRANSPORT ET VÉHICULE POIDS LOURD COMPRENANT UN TEL DISPOSITIF DE TRANSPORT

(30) Priorität: 03.03.2023 DE 202023101022 U
(43) Veröffentlichungstag der Anmeldung: 04.09.2024
(73) Patentinhaber: Goldhofer AG, 87700 Memmingen (DE)
(72) Erfinder: THOMA, Claus, 87734 Benningen (DE)
(74) Vertreter: Weickmann & Weickmann PartmbB

(56) Entgegenhaltungen:
- AU-A1- 2018 357 973
- AU-A1- 2019 275 672
- US-A- 2 958 478
- US-A- 4 454 999

## Beschreibung

Die Erfindung betrifft eine Transportvorrichtung nach dem Oberbegriff des Anspruchs 1.

Die Erfindung betrifft ferner ein Schwerlastfahrzeug, umfassend eine derartige Transportvorrichtung.

Es sei bereits an dieser Stelle darauf hingewiesen, dass das Schwerlastfahrzeug sowohl ein motorisch angetriebenes Schwerlastfahrzeug als auch ein gezogenes Schwerlastfahrzeug sein kann, beispielsweise ein Schwerlastanhänger oder wie es im Anhang XI zur EG-Richtlinie 2007-46-EG in der Fassung vom 15.07.2011 heißt ein "Anhänger für Schwerlasttransporte".

Aus dem Dokument US 4 454 999 A, welches als nächstliegender Stand der Technik erachtet wird, ist eine Transportvorrichtung bekannt, welche dazu ausgebildet und bestimmt ist, eine im Wesentlichen rotationssymmetrische Last aufzunehmen, wobei die Transportvorrichtung einen Tragrahmen mit Längsträgern und Querträgern umfasst, welche im Wesentlichen orthogonal zu den Längsträgern sind, sowie eine an dem Tragrahmen angebrachte Lastantriebseinrichtung umfasst, welche dazu eingerichtet ist, die Last an ihrem Umfang zur Ausführung einer Drehbewegung in Umfangsrichtung relativ zu dem Tragrahmen anzutreiben. Ferner sei auf die Dokumente US 2 958 478 A, AU 2019 257 672 A1 und AU 2018 357 973 A1 hingewiesen.

Ein Anwendungsfall, bei welchem gattungsgemäße Transportvorrichtungen eingesetzt werden, betrifft den Transport von Lasten in Form von Kabeltrommeln, auf welche ein Kabel, beispielsweise ein zu verlegendes Erdkabel oder dergleichen, gewickelt sein kann. Bereits an dieser Stelle sei jedoch darauf hingewiesen, dass, obwohl die vorliegende Erfindung im Folgenden teilweise anhand von Kabeltrommeln beschrieben werden wird, hieraus keine wie auch immer geartete Einschränkung abgeleitet werden kann. Bei der Verlegung solcher Kabel ist es wünschenswert, das auf die Kabeltrommel gewickelte Kabel so lang wie möglich zu gestalten, da insbesondere bei der Verlegung von Erdkabeln häufig lange Distanzen zurückgelegt werden müssen. Ferner ist es bei der Kabelverlegung bevorzugt, dass das Kabel möglichst an einem Stück verlegt werden kann, d.h. möglichst wenige zu verbindende Trennstellen aufweist, da derartige Trennstellen eine besonderes hohe Fehler- bzw. Wartungsanfälligkeit aufweisen können.

Um das Kabel an einem Zielort von der Kabeltrommel abwickeln zu können, umfassen gattungsgemäße Transportvorrichtungen in der Regel eine an dem Tragrahmen angebrachte Lastantriebseinrichtung, welche dazu eingerichtet ist, die im Wesentlichen rotationssymmetrische Last in Form der Kabeltrommel an ihrem Umfang zur Ausführung einer Drehbewegung in Umfangsrichtung relativ zu dem Tragrahmen anzutreiben. Die Lastantriebseinrichtung ist erforderlich, da insbesondere Erdkabel häufig nicht oder nur in sehr geringem Maße auf Zug belastet werden dürfen, so dass ein Abwickeln des Kabels über ein Ziehen an einem freien Ende davon meist nicht möglich ist.

Auch sind derartige Kabeltrommeln häufig mit verschiedenen Kabeltrommeldurchmessern und oder -längen versehen, weshalb der Tragrahmen gattungsgemäßer Transportvorrichtungen in der Regel in seiner Länge und/oder in seiner Breite verstellbar ausgebildet ist. Die Verstellbarkeit erhöht jedoch zwingend das Eigengewicht der Transportvorrichtung, da die Längsträger und/oder die Querträger des Tragrahmens beispielsweise teleskopisch ausgebildet sein müssen und auch entsprechende Arretiermittel vorgesehen sein müssen. Ein höheres Eigengewicht der Transportvorrichtung reduziert jedoch zwingend ein maximal zulässiges Eigengewicht der zu transportierenden Last und macht die Transportvorrichtung insgesamt schwerer zu handhaben.

Neben dem Gewicht spielt auch eine Gesamthöhe der Transportvorrichtung einschließlich der darauf geladenen Last eine entscheidende Rolle, da diese auch bei einem Transport mit Sondergenehmigung meist eine Höhe von etwa 4,50 m nicht überschreiten darf. Im Zusammenhang mit dem Transport von Kabeltrommeln wirkt sich also auch dieser Faktor beschränkend auf einen maximalen Kabeltrommeldurchmesser und damit eine maximal transportierbare Kabellänge aus.

Es ist daher Aufgabe der vorliegenden Erfindung, hier Abhilfe zu schaffen.

Erfindungsgemäß wird diese Aufgabe durch eine Transportvorrichtung nach Anspruch 1 gelöst.

Da die erfindungsgemäße Transportvorrichtung die vorbestimmte feste Länge sowie die vorbestimmte feste Breite aufweist, kann auf den Einsatz entsprechender Einstell- und/oder Arretiermittel verzichtet werden, was dazu führt, dass die Transportvorrichtung grundsätzlich leichter, d.h. mit einem geringeren Eigenwicht, als bekannte gattungsgemäße Transportvorrichtungen ausgeführt werden kann. Das maximal zulässige Eigenwicht der zu transportierenden Last, beispielsweise in Form der Kabeltrommel, kann also erfindungsgemäß entsprechend höher ausfallen.

Um darüber hinaus sicherzustellen, dass die Gesamthöhe der Transportvorrichtung einschließlich der darauf geladenen Last ein vorbestimmtes Maß nicht überschreitet und ein Lastdurchmesser der zu transportierenden Last dennoch möglichst groß gewählt werden kann, ist erfindungsgemäß die wenigstens eine Antriebseinheit der Lastantriebseinrichtung an der Innenseite und/oder der Oberseite wenigstens eines der Längsträger und/oder der Querträger angeordnet. Dabei kann der Tragrahmen vorzugsweise derart ausgebildet sein, dass, bei Verwendung der Transportvorrichtung, der Umfang der im Wesentlichen rotationssymmetrischen Last, im Wesentlichen bündig mit einer Unterseite des Tragrahmens abschließt. Als Folge hiervon kann aufgrund der Anordnung der wenigstens einen Antriebseinheit die Last maximal in den Transportrahmen eintauchen und die Gesamthöhe der Transportvorrichtung einschließlich der darauf geladenen Last möglichst gering gehalten werden.

Vorzugsweise können sowohl die Längsträger als auch die Querträger eine vorbestimmte feste Länge aufweisen, wobei weiter vorzugsweise jeder Querträger und/oder jeder Längsträger frei von Trennstellen ist. Die feste vorbestimmte Länge der Transportvorrichtung kann dabei im Wesentlichen der vorbestimmten festen Länge der Längsträger entsprechen, während die feste vorbestimmte Breite der Transportvorrichtung im Wesentlichen der festen vorbestimmten Länge der Querträger entsprechen kann. Ferner kann die Transportvorrichtung, insbesondere der Tragrahmen, eine im Wesentlichen rechteckige Form aufweisen.

Grundsätzlich kann die Antriebseinheit der Lastantriebseinrichtung als eine beliebige Antriebseinheit ausgebildet sein, welche dazu in der Lage ist, die im Wesentlichen rotationssymmetrische Last an ihrem Umfang zur Ausführung der Drehbewegung in Umfangsrichtung relativ zu dem Tragrahmen anzutreiben. Bevorzugt ist die wenigstens eine Antriebseinheit jedoch als Antriebsrolle ausgebildet, welche vorzugsweise dazu ausgebildet und bestimmt ist, mit dem Umfang der Last in Reibeingriff gebracht zu sein. Die Antriebsrolle kann ferner dazu eingerichtet sein, mit einer vorbestimmten Umfangsgeschwindigkeit, vorzugsweise im Bereich von wenigstens 15 m/min, weiter vorzugsweise von wenigstens 18 m/min, angetrieben zu werden. Eine derartige Antriebsrolle ist dabei mit einer Vielzahl zu transportierender Lasten kompatibel und kann bei der Wahl eines geeigneten Übersetzungsverhältnisses auch Lasten hohen Durchmessers mit vergleichsweise geringer Antriebsleitung in Umfangsrichtung antreiben.

Um die Antriebseinheit besonders kompakt, beispielsweise mit vergleichsweise geringem Durchmesser, ausbilden zu können, kann gemäß einem Ausführungsbeispiel ein Material der wenigstens einen Antriebseinheit eine höhere Härte als ein Material eines Abschnitts der Last aufweisen, welcher dazu bestimmt ist, bei Verwendung der Transportvorrichtung, die Antriebseinheit zu kontaktieren. Dies kann zwar dazu führen, dass das Material der Last stärker verschleißt als das Material der Antriebseinheit, jedoch kann dies in gewissen Grenzen toleriert werden, da insbesondere bei dem Abwickeln einer Kabeltrommel der Verschleiß meist nur an der Kabeltrommel selbst und nicht an dem abzuwickelnden Kabel auftritt.

Um die Lastantriebseinrichtung in vorbestimmten Grenzen an Lasten mit verschiedenem Durchmesser und/oder verschiedener Länge anpassen zu können, wird gemäß einem Ausführungsbeispiel vorgeschlagen, dass die wenigstens eine Antriebseinheit in Längsrichtung und/oder in Breitenrichtung der Transportvorrichtung verschiebbar an dem Längsträger und/oder dem Querträger angebracht ist.

Bei dem Transport von Lasten mit verschiedenem Durchmesser kann es ferner erforderlich sein, dass eine Position der wenigstens einen Antriebseinheit an der Innenseite des wenigstens einen der Längsträger und/oder der Querträger in Höhenrichtung angepasst werden muss, um zu verhindern, dass die Last zu weit in den Transportrahmen eintaucht und dabei gegebenenfalls sogar an einer Unterseite des Transportrahmens über diesen hinaus vorsteht. Daher kann vorzugsweise eine Position der wenigstens einen Antriebseinheit in Höhenrichtung der Transportvorrichtung mittels eines Einstellelements, vorzugsweise mittels eines Einlegeblechs, einstellbar sein.

Grundsätzlich kann die Lastantriebseinrichtung beliebig ausgebildet sein, beispielsweise als eine elektrische oder motorische Lastantriebseinrichtung oder dergleichen. Um jedoch auch hohe Antriebskräfte mit einem kompakt bauenden Antrieb mit vergleichsweise geringem Gewicht erreichen zu können, kann die Lastantriebseinrichtung als eine hydraulische Lastantriebseinrichtung ausgebildet sein, welche dazu eingerichtet ist, die wenigstens eine Antriebseinheit, vorzugsweise mittels einer Hydraulikpumpe, hydraulisch anzutreiben. Die Hydraulikpumpe kann wiederum von einem verbrennungsmotorischen Aggregat, beispielsweise einem Dieselaggregat, oder einem elektrischen Aggregat oder dergleichen angetrieben sein. Umfasst die Lastantriebseinrichtung beispielsweise vier Antriebseinheiten, welche vorzugsweise aus zwei Paaren von Antriebseinheiten gebildet sein können, welche jeweils zwei gegenüberliegend an dem Tragrahmen angeordnete Antriebseinheiten umfassen, kann die hydraulische Lastantriebseinrichtung ferner ein 4-fach-Proportionalventil und/oder einen hydraulischen Mengenteiler und/oder eine 4-fach-Pumpe umfassen, um einen Gleichlauf aller Antriebseinheiten, insbesondere ohne Schlupf mit der Last, sicherzustellen.

Mit einem derartigen Aggregat, welches vorzugsweise auch dazu geeignet ist, mittels eines Generators oder dergleichen elektrische Energie bereitzustellen, können zudem eine Steuerung der Lastantriebseinrichtung und/oder andere Verbraucher, wie beispielsweise Arbeitsscheinwerfer an der Transportvorrichtung oder dergleichen, betrieben werden.

Sofern die Transportvorrichtung mit der darauf befindlichen Last beispielsweise auf eine Ladefläche eines Schwerlastfahrzeugs beladen oder von dieser entladen werden soll, kann dies beispielsweise mittels eines entsprechend dimensionierten Krans oder dergleichen erfolgen. Die Bereitstellung eines separaten Krans, wie eines Schwerlastkrans oder dergleichen, kann jedoch äußerst zeit- und/oder kostenintensiv sein. Auch kann es gerade bei dem Transport vorstehend genannter Kabeltrommeln dazu kommen, dass die Transportvorrichtung auch auf abwegigem Gelände bewegt werden muss, welches für einen Schwerlastkran nur schwer erreichbar ist. Gemäß einem weiteren Ausführungsbeispiel wird daher vorgeschlagen, dass die Transportvorrichtung ferner eine Stützenanordnung umfasst, welche dazu eingerichtet ist, abnehmbar an dem Tragrahmen angebracht zu sein und sich auf einem Untergrund unterhalb der Transportvorrichtung abzustützen. Vorzugsweise kann die Transportvorrichtung zwei Paare von jeweils gegenüberliegend an dem Tragrahmen anbringbaren Stützen umfassen. Die Stützen, welche vorzugsweise ein Gewicht von höchstens etwa 350 kg aufweisen, können beispielsweise mittels eines leichten Krans, welcher vorzugsweise an einem Zugfahrzeug des Schwerlastfahrzeugs vorhanden ist oder separat bereitgestellt sein kann, an dem Transportrahmen angebracht werden.

Bei Verwendung kann die Transportvorrichtung beispielsweise mittels der Stützen derart angehoben werden, dass ein Schwerlastfahrzeug mit seiner Ladefläche unterhalb des Tragrahmens der Transportvorrichtung positioniert werden kann. Anschließend kann die Transportvorrichtung wiederum mittels der Stützen abgesenkt werden, um, ggf. nach Entfernung der Stützen, auf der Ladefläche des Schwerlastfahrzeugs weiter transportiert werden zu können.

Auch die Stützen der Stützenanordnung können grundsätzlich beliebig betätigt werden. **In** Weiterbeildung des letztgenannten Ausführungsbeispiels wird jedoch vorgeschlagen, dass die Stützenanordnung als eine hydraulisch betätigbare Stützenanordnung ausgebildet ist, wobei die Stützenanordnung vorzugsweise dazu eingerichtet ist, von der gleichen Hydraulikpumpe wie die Lastantriebseinrichtung angetrieben zu werden. Ein Gleichlauf der Stützen kann dabei wie bei den Antriebseinheiten bevorzugt ebenfalls über das 4-fach-Proportionalventil und/oder den hydraulischen Mengenteiler und/oder die 4-fach-Pumpe der Lastantriebseinrichtung erreicht werden. Alternativ kann die Stützenanordnung dazu eingerichtet sein, von einer weiteren Hydraulikpumpe angetrieben zu werden, welche vorzugsweise ein weiteres 4-fach-Proportionalventil und/oder einen weiteren hydraulischen Mengenteiler und/oder weitere 4-fach-Pumpe umfasst, um den Gleichlauf der Stützen sicherzustellen.

Wie bereits eingangs erwähnt, kann die im Wesentlichen rotationssymmetrische Last vorzugsweise eine Kabeltrommel sein, welche dazu ausgebildet und bestimmt ist, ein Kabel aufzunehmen, welches vorzugsweise mittels der Lastantriebseinrichtung von der Kabeltrommel abwickelbar und/oder auf die Kabeltrommel aufwickelbar ist. Das Kabel kann beispielsweise als ein Erdkabel, insbesondere zur Stromversorgung, oder dergleichen ausgebildet sein.

Sofern die zu transportierende Last ein Eigengewicht aufweist, welches ein vorbestimmtes Gewicht, insbesondere von etwa 65 t, übersteigt, kann neben der üblichen Ladungssicherung auch eine besondere Ladungssicherung erforderlich sein, welche ggf. auftretende Beschleunigungen und/oder Verzögerungen während eines Transports aufnehmen kann. Gemäß einem weiteren Ausführungsbeispiel kann die Transportvorrichtung daher ferner eine Ladungssicherungseinrichtung, insbesondere einen Ladungssicherungsbock, umfassen, welche an dem Tragrahmen angebracht ist, und dazu eingerichtet ist, die Last an dem Tragrahmen, insbesondere in Längsrichtung, zu sichern.

Um auch bei einer Leerfahrt, bei welcher die Transportvorrichtung mittels eines Schwerlastfahrzeugs, beispielsweise eines Schwerlastanhängers, gegebenenfalls über öffentliche Straßen transportiert werden muss, die geltenden Zulassungsvorschriften ggf. mit Sondergenehmigung einhalten zu können, kann die vorbestimmte feste Breite der Transportvorrichtung höchstens etwa 3 m betragen.

Um darüber hinaus auch einen Transport durch Unterführungen von Brücken oder dergleichen zu ermöglichen, kann ein Lastdurchmesser der im Wesentlichen rotationssymmetrischen Last höchstens etwa 4,50 m, insbesondere höchstens etwa 4,30 m, betragen.

Um die Position der Last auf dem Transportrahmen dabei möglichst niedrig zu halten, kann zusätzlich oder alternativ ein Antriebseinheitsdurchmesser der Antriebseinheit, insbesondere der Antriebsrolle, höchstens etwa 230 mm betragen. Ferner kann jede Antriebseinheit, insbesondere jede Antriebsrolle, ein Gewicht von höchstens etwa 320 kg aufweisen.

Während aus dem Stand der Technik bekannte gattungsgemäße Transportvorrichtungen, welche längen- und/oder breitenverstellbar sind, in der Regel ein Leergewicht von etwa 14 t aufweisen, kann vorzugsweise ein Leergewicht der erfindungsgemäßen Transportvorrichtung ohne Last höchstens etwa 10 t, vorzugsweise höchstens etwa 7 t, betragen.

Durch das vergleichsweise geringe Eigengewicht der erfindungsgemäßen Transportvorrichtung kann die Nutzlast, d.h. ein Eigengewicht der Last, bei vorgegebenem Gesamtgewicht von Transportvorrichtung und zu transportierender Last daher entsprechend erhöht sein. Dabei kann die Last vorzugsweise ein Gewicht von mindestens 50 t, beispielsweise etwa 60 t, insbesondere von mindestens 90 t, beispielsweise etwa 95 t, und/oder höchstens 100 t aufweisen.

Gemäß einem weiteren Gesichtspunkt der Erfindung wird die obige Aufgabe durch ein Schwerlastfahrzeug gelöst, welches eine erfindungsgemäße Transportvorrichtung umfasst.

Bezüglich der Vorteile und Wirkungen des erfindungsgemäßen Schwerlastfahrzeugs wird auf die vorstehende Diskussion der Vorteile und Wirkungen der erfindungsgemäßen Transportvorrichtung verwiesen.

Das Schwerlastfahrzeug kann dabei ein vorderes Teilfahrzeug und ein hinteres Teilfahrzeug umfassen, wobei die Transportvorrichtung vorzugsweise dazu eingerichtet ist, zwischen dem vorderen Teilfahrzeug und dem hinteren Teilfahrzeug angeordnet zu sein. Die Transportvorrichtung kann also beispielsweise als eine Brücke, insbesondere als eine Kabeltrommelbrücke oder Kesselbrücke, ausgebildet sein.

Wie bereits vorstehend erläutert, kann die Transportvorrichtung zusätzlich oder alternativ dazu eingerichtet sein, auf einer Ladefläche des vorderen Teilfahrzeugs und/oder des hinteren Teilfahrzeugs angeordnet zu sein, wobei das vordere Teilfahrzeug vorzugsweise einen Schwanenhals umfasst, um mit einem Zugfahrzeug koppelbar zu sein. Die Transportvorrichtung kann dabei durch Befestigungsmittel, beispielsweise in Form von Befestigungsschienen oder dergleichen, insbesondere formschlüssig, an dem vorderen Teilfahrzeug und/oder dem hinteren Teilfahrzeug fixiert sein.

Nachstehend wird ein Ausführungsbeispiel der vorliegenden Erfindung anhand der beigefügten Zeichnungen beschrieben werden. Es stellen dar:
- Figur 1A: eine Draufsicht auf ein Ausführungsbeispiel der erfindungsgemäßen Transportvorrichtung,
- Figur 1B: eine Seitenansicht der Transportvorrichtung aus Figur 1A,
- Figur 1C: eine Vorderansicht der Transportvorrichtung aus Figur 1A,
- Figur 2A: eine Draufsicht auf die Transportvorrichtung, welche um eine Stützenanordnung ergänzt ist,
- Figur 2B: eine Seitenansicht der Transportvorrichtung gemäß Figur 2A,
- Figur 3A: eine Seitenansicht eines erfindungsgemäßen Schwerlastfahrzeugs, welches die erfindungsgemäße Transportvorrichtung umfasst,
- Figur 3B: eine Draufsicht auf das Schwerlastfahrzeug gemäß Figur 3A,
- Figur 3C: eine Vorderansicht des Schwerlastfahrzeugs gemäß Figur 3A,
- Figur 4A: eine Seitenansicht des erfindungsgemäßen Schwerlastfahrzeugs, wobei die erfindungsgemäße Transportvorrichtung auf eine Ladefläche des Schwerlastfahrzeugs geladen ist,
- Figur 4B: eine Draufsicht auf das Schwerlastfahrzeug gemäß Figur 4A, und
- Figur 4C: eine Vorderansicht des Schwerlastfahrzeugs gemäß Figur 4A.

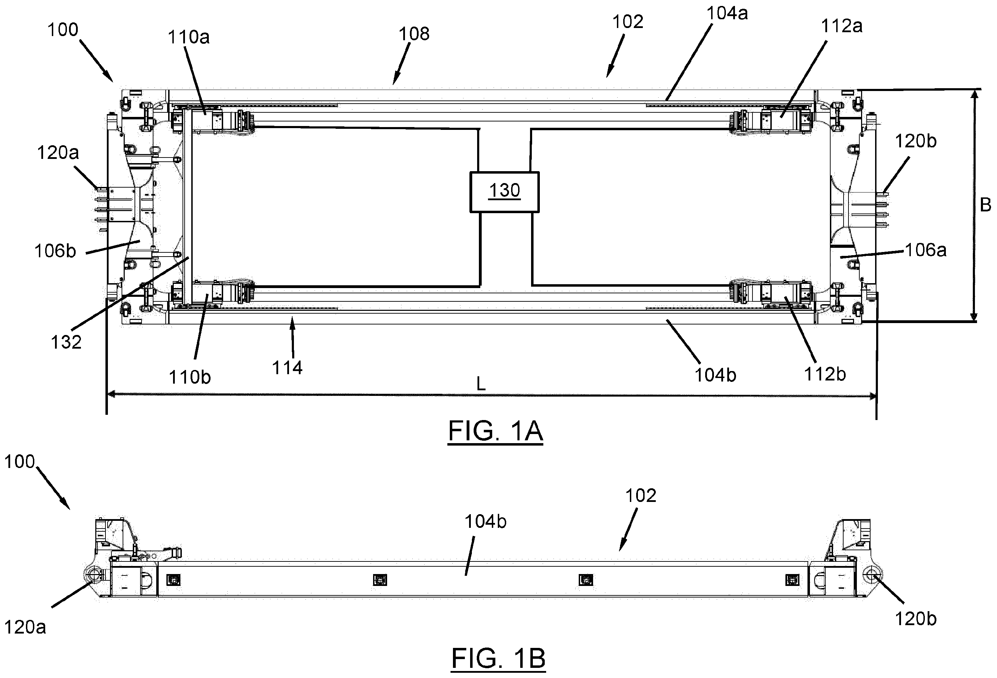

In Figur 1A ist eine erfindungsgemäße Transportvorrichtung allgemein durch das Bezugszeichen 100 gekennzeichnet.

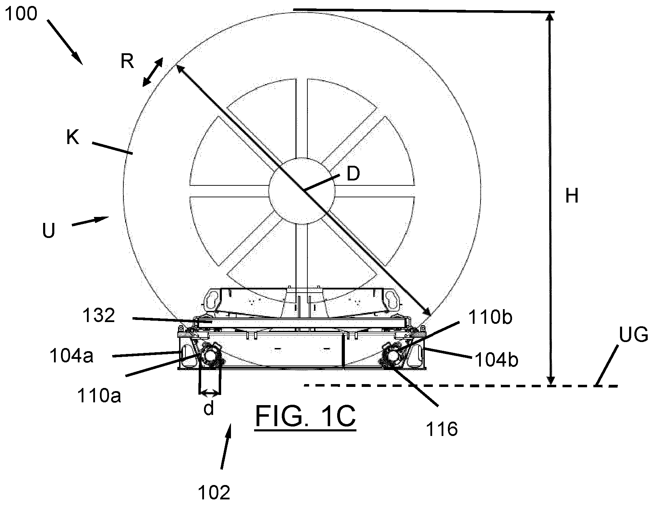

Die Transportvorrichtung 100 ist dazu ausgebildet und bestimmt, eine im Wesentlichen rotationssymmetrische, insbesondere zylindrische Last K aufzunehmen, welche in Figur 1C durch gestrichelte Linien dargestellt ist. In dem dargestellten Ausführungsbeispiel ist die Last K als eine Kabeltrommel mit einem darauf aufgewickelten Kabel ausgebildet.

Die Transportvorrichtung 100 umfasst einen Tragrahmen 102, welcher dazu eingerichtet ist, die Last K an einem Umfang, d.h. einer Umfangsfläche, U davon aufzunehmen. Der Tragrahmen 102 umfasst wenigstens zwei beabstandet angeordnete Längsträger 104a und 104b sowie wenigstens zwei beabstandet angeordnete Querträger 106a und 106b, welche sich im Wesentlichen orthogonal zu den Längsträgern 104a und 104b erstrecken.

An dem Tragrahmen 102 ist eine Lastantriebseinrichtung 108 angebracht, welche dazu eingerichtet ist, die Last K an ihrem Umfang U derart anzutreiben, dass sie eine Drehbewegung in Umfangsrichtung R (siehe Fig. 1C) relativ zu dem Tragrahmen 102 ausführen kann. Hierzu umfasst die Lastantriebseinrichtung 108 in dem dargestellten Ausführungsbeispiel zwei Paare von Antriebseinheiten, nämlich ein erstes Paar gebildet aus den Antriebseinheiten 110a und 110b und ein zweites Paar gebildet aus den Antriebseinheiten 112a und 112b, wobei jedes Paar von Antriebseinheiten gegenüberliegend an den Querträgern 104a bzw. 104b angebracht ist. In dem Ausführungsbeispiel, welches beispielsweise in Figur 1A gezeigt ist, sind die Antriebseinheiten als Antriebsrollen 110a, 110b, 112a und 112b ausgebildet. Die Antriebsrollen 110a, 110b, 112a und 112b sind jeweils dazu ausgebildet und bestimmt, mit dem Umfang U der Last K in Eingriff gebracht zu werden, um die Last K in der Umfangsrichtung R (in und entgegen der in Figur 1C dargestellten Pfeilrichtung) antreiben zu können, um das Kabel, welches auf die Last K in Form der Kabeltrommel gewickelt ist, von der Kabeltrommel abwickeln und/oder auf diese aufwickeln zu können.

Erfindungsgemäß weist die Transportvorrichtung 100 eine vorbestimmte feste Länge L sowie eine vorbestimmte feste Breite B auf. Dies kann dadurch erreicht werden, dass sowohl die Längsträger 104a und 104b als auch die Querträger 106a und 106b jeweils eine vorbestimmte feste Länge aufweisen. Die Längsträger 104a und 104b und die Querträger 106a und 106b weisen dabei jeweils vorzugsweise keine Trennstellen auf, d.h. diese sind im Wesentlichen durchgehend ausgebildet und etwa nicht teleskopisch oder dergleichen ausgebildet.

Wie in Figur 1C dargestellt, sind in dem dargestellten Ausführungsbeispiel die Antriebseinheiten in Form der Antriebsrollen 110a, 110b, 112a und 112b an einer Innenseite der Längsträger 104a bzw. 104b angebracht. Die Last K kann dadurch in den Tragrahmen 102 eintauchen, vorzugsweise jedoch nur so weit, dass sie nicht von einer Unterseite des Tragrahmens 102 her nach außen vorsteht (wie ebenfalls in Figur 1C dargestellt). Alternativ können die Antriebsrollen 110a, 110b, 112a und 112b jedoch auch an einer Oberseite der Längsträger und/oder der Querträger angebracht sein (nicht dargestellt).

Wie in Figur 1A angedeutet, können die Antriebseinheiten in Längsrichtung L verschiebbar an dem Längsträger 104a und/oder 104b angebracht sein. Hierzu sind an den Längsträgern 104a und/oder 104b entsprechende Aussparungen 114, beispielsweise Bohrungen, vorgesehen, mittels welchen jede Antriebseinheit an verschiedenen Positionen in Längsrichtung L an dem Querträger 104a und/oder 104b angebracht, insbesondere angeschraubt, werden kann.

Vorzugsweise kann auch eine Position der Antriebsrollen 110a, 110b, 112a und 112b in Höhenrichtung H der Transportvorrichtung 100 einstellbar sein. Dies erfolgt beispielsweise mittels eines Einstellelements 116, welches beispielsweise als ein Einlegeblech oder dergleichen ausgebildet sein kann und in Figur 1C beispielswiese unterhalb der Antriebsrolle 110b schematisch eingezeichnet ist. Durch die Änderung der Position der Antriebsrolle 110b sowie ggf. der weiteren Antriebsrollen 110a, 112a und 112b in Höhenrichtung H kann die Transportvorrichtung 100 in gewissen Grenzen an verschiedene Durchmesser D der zu transportierenden Last K, insbesondere an verschiedene Kabeltrommeldurchmesser, angepasst werden.

Um die Transportvorrichtung 100 mit einem Schwerlastfahrzeug koppeln zu können, umfasst die Transportvorrichtung 100 ferner an beiden Längsenden eine Kupplungsvorrichtung, beispielsweise eine Bolzen-Laschen-Kupplung 120a bzw. 120b, welche dazu ausgebildet ist, mit einem vorderen Fahrwerk bzw. einem hinteren Fahrwerk eines Schwerlastfahrzeugs gekoppelt zu werden, welches nachstehend näher beschrieben werden wird.

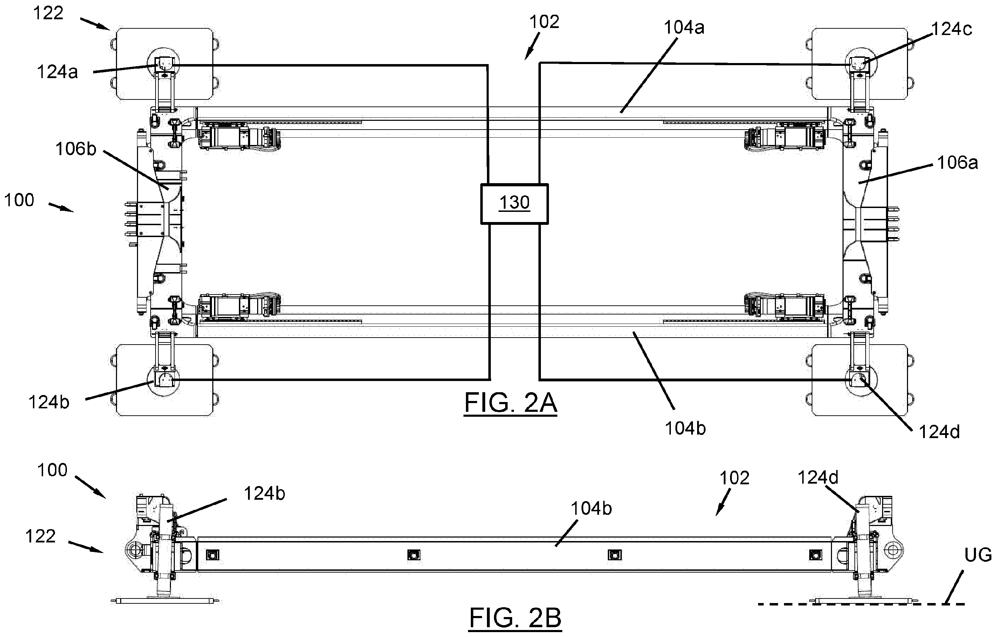

Wie in Figur 2A dargestellt, kann die Transportvorrichtung 100 ferner eine Stützenanordnung 122 umfassen, welche in dem dargestellten Ausführungsbeispiel aus zwei Paaren von jeweils gegenüberliegend angeordneten Stützen 124a und 124b bzw. 124c und 124d ausgebildet ist. Die Stützen der Stützenanordnung 122 können dabei als hydraulisch betätigbare Stützen ausgebildet sein, welche vorzugsweise mittels einer Hydraulikpumpe 130 betrieben werden können, welche in Figur 2A lediglich schematisch angedeutet ist. Vorzugsweise sind auch die Antriebsrollen 110a, 110b, 112a und 112b jeweils durch die Hydraulikpumpe 130 hydraulisch antreibbar. Hierzu sind sowohl die Stützen 124a bis 124d als auch die Antriebsrollen 110a, 110b, 112a und 112b über entsprechende Hydraulikleitungen fluidisch mit der Hydraulikpumpe 130 verbunden, welche in den Figuren 1A und 2A ebenfalls lediglich schematisch dargestellt sind. Die Hydraulikpumpe 130 kann beispielsweise von einem verbrennungsmotorischen Aggregat, beispielsweise einem Dieselaggregat, oder einem elektrischen Aggregat oder dergleichen angetrieben sein.

Wie in Figur 1C dargestellt, kann die Transportvorrichtung 100 ferner eine Ladungssicherungseinrichtung 132 umfassen, welche in dem dargestellten Ausführungsbeispiel als ein Ladungssicherungsbock ausgebildet ist, welcher an dem Tragrahmen 102 angebracht ist und dazu eingerichtet ist, die Last K an dem Tragrahmen 102, insbesondere in Längsrichtung L, zu sichern.

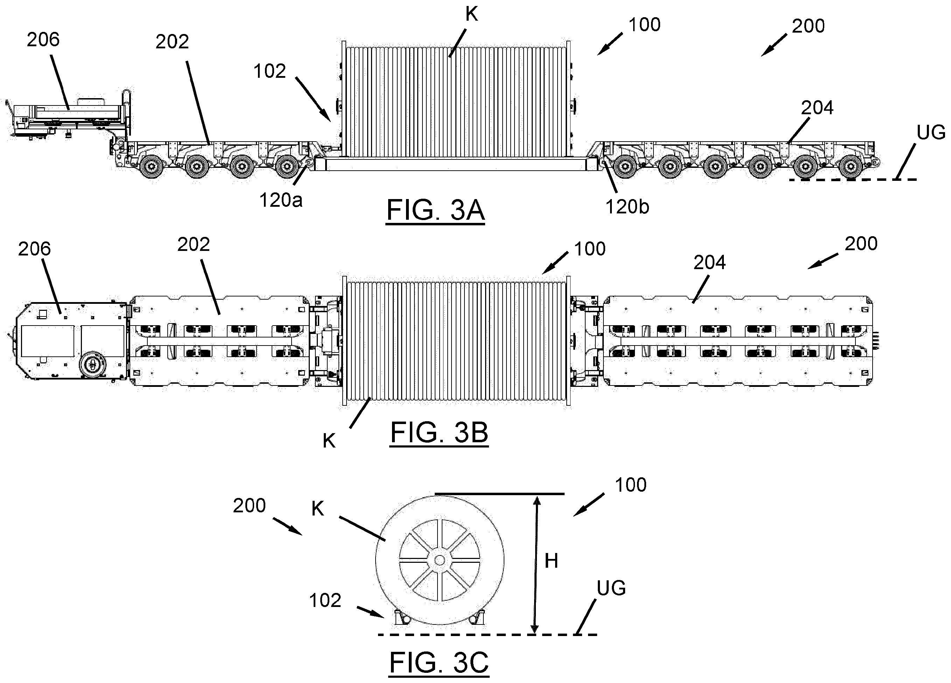

In den Figuren 3A bis 3C ist ein Ausführungsbeispiel eines erfindungsgemäßen Schwerlastfahrzeugs allgemein durch das Bezugszeichen 200 gekennzeichnet.

Das Schwerlastfahrzeug 200 umfasst die erfindungsgemäße Transportvorrichtung 100, welche in dem dargestellten Ausführungsbeispiel zwischen einem vorderen Teilfahrzeug 202 in Form eines vorderen Fahrwerks und einem hinteren Teilfahrzeug 204 in Form eines hinteren Fahrwerks eingefügt ist. Die Transportvorrichtung 100 ist dabei über die Bolzen-Laschen-Kupplungen 120a und 120b mit dem vorderen Fahrwerk 202 bzw. dem hinteren Fahrwerk 204 gekoppelt, so dass sie als sogenannte Brücke, insbesondere Kabeltrommelbrücke oder Kesselbrücke, zwischen dem vorderen Teilfahrzeug 202 und dem hinteren Teilfahrzeug 204 schwebend angeordnet ist.

Da das Schwerlastfahrzeug 200 gemäß dem dargestellten Ausführungsbeispiel als ein Schwerlastanhänger ausgebildet ist, kann dieser ferner einen Schwanenhals 206 umfassen, welcher dazu ausgebildet und bestimmt ist, das Schwerlastfahrzeug 200 mit einem Zugfahrzeug (nicht dargestellt) zu koppeln.

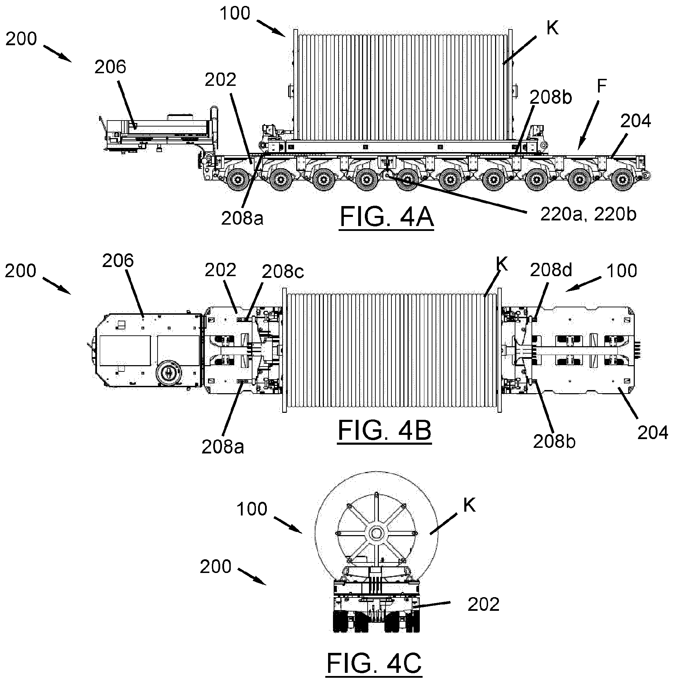

In den Figuren 4A, 4B und 4C ist hingegen ein Zustand dargestellt, in welchem die Transportvorrichtung 100 auf eine Ladefläche F des vorderen Teilfahrzeugs 202 und des hinteren Teilfahrzeugs 204 geladen ist. Das vordere Teilfahrzeug 202 und das hintere Teilfahrzeug 204 sind dabei durch Bolzen-Laschen-Kupplungen 220a, 220b miteinander gekoppelt, welche ansonsten dazu vorgesehen sein können, mit den Bolzen-Laschen-Kupplungen 120a bzw. 120b der Transportvorrichtung 100 gekoppelt zu sein, sofern die Transportvorrichtung 100 zwischen dem vorderen Teilfahrzeug 202 und dem hinteren Teilfahrzeug 204 angeordnet ist. Die Transportvorrichtung 100 kann dabei durch Befestigungsmittel, welche in dem dargestellten Ausführungsbeispiel als Befestigungsschienen 208a, 208b, 208c und 208d ausgebildet sind, insbesondere formschlüssig, an dem vorderen Teilfahrzeug 204 bzw. dem hinteren Teilfahrzeug 206 fixiert sein.

Der in den Figuren 3A bis 3C dargestellte Zustand der Transportvorrichtung 100 bzw. des Schwerlastfahrzeugs 200 kann beispielsweise wie folgt in den in Figur 4A bzw. Figur 4B dargestellten Zustand überführt werden: Zunächst kann ausgehend von Figur 3A die Stützenanordnung 122 wie in Figur 2A bzw. 2B dargestellt, beispielsweise mit Hilfe eines Krans, an dem Tragrahmen 102 angebracht werden. Nachdem die Stützen der Stützenordnung 122 auf einen unterhalb der Transportvorrichtung 100 befindlichen Untergrund UG abgesenkt worden sind, können das vordere Teilfahrzeug 202 und das hintere Teilfahrzeug 204 von der Transportvorrichtung 100 getrennt werden, da die Transportvorrichtung 100 einschließlich der darauf geladenen Last K allein durch die Stützenanordnung 122 abgestützt werden kann. Danach kann die Transportvorrichtung 100 einschließlich der darauf beladenen Last K mittels der Stützenanordnung 122 derart in Höhenrichtung H angehoben werden, dass das vordere Teilfahrzeug 202 und das hintere Teilfahrzeug 204 im gekoppelten Zustand unter der Transportvorrichtung 100 positioniert werden können. Anschließend kann die Transportvorrichtung 100 einschließlich der Last K mittels der Stützenanordnung 122 auf die Ladefläche F abgesenkt werden, so dass der in den Figuren 4A, 4B und 4C dargestellte Zustand erreicht werden kann.

## Patentansprüche

1. Transportvorrichtung (100), welche dazu ausgebildet und bestimmt ist, eine im Wesentlichen rotationssymmetrische, insbesondere zylindrische, Last (K), aufzunehmen, die Transportvorrichtung (100) umfassend
einen Tragrahmen (102), welcher dazu eingerichtet ist, die Last (K) an einem Umfang (U) davon aufzunehmen, wobei der Tragrahmen (102) wenigstens zwei beabstandet angeordnete Längsträger (104a, 104b) sowie wenigstens zwei beabstandet angeordnete Querträger (106a, 106b) umfasst, welche sich im Wesentlichen orthogonal zu den Längsträgern (104a, 104b) erstrecken, und
eine an dem Tragrahmen (102) angebrachte Lastantriebseinrichtung (108), welche dazu eingerichtet ist, die Last (K) an ihrem Umfang (U) zur Ausführung einer Drehbewegung in Umfangsrichtung (R) relativ zu dem Tragrahmen (102) anzutreiben,
wobei die Transportvorrichtung (100) eine vorbestimme feste Länge (L) sowie eine vorbestimme feste Breite (B) aufweist und wenigstens eine Antriebseinheit (110a, 110b, 112a, 112b) der Lastantriebseinrichtung (108) an einer Innenseite und/oder einer Oberseite wenigstens eines der Längsträger (104a, 104b) und/oder der Querträger (106a, 106b) angeordnet ist,
**dadurch gekennzeichnet, dass**
die Transportvorrichtung (100) an beiden Längsenden eine Kupplungsvorrichtung umfasst, welche dazu ausgebildet ist, mit einem vorderen Fahrwerk bzw. einem hinteren Fahrwerk eines Schwerlastfahrzeugs gekoppelt zu werden.

2. Transportvorrichtung nach Anspruch 1,
wobei jeder Längsträger (104a, 104b) und/oder jeder Querträger (106a, 106b) frei von Trennstellen ist.

3. Transportvorrichtung nach einem der vorhergehenden Ansprüche,
wobei die wenigstens eine Antriebseinheit (110a, 110b, 112a, 112b) als Antriebsrolle ausgebildet ist, welche vorzugsweise dazu ausgebildet und bestimmt ist, mit dem Umfang (U) der Last (K) in Reibeingriff gebracht zu sein.

4. Transportvorrichtung nach einem der vorhergehenden Ansprüche,
wobei ein Material der wenigstens einen Antriebseinheit (110a, 110b, 112a, 112b) eine höhere Härte als ein Material eines Abschnitts der Last (K) aufweist, welcher dazu bestimmt ist, bei Verwendung der Transportvorrichtung (100), die Antriebseinheit (110a, 110b, 112a, 112b) zu kontaktieren.

5. Transportvorrichtung nach einem der vorhergehenden Ansprüche,
wobei die wenigstens eine Antriebseinheit (110a, 110b, 112a, 112b) in Längsrichtung (L) und/oder in Breitenrichtung (B) der Transportvorrichtung (100) verschiebbar an dem Längsträger (104a, 104b) und/oder dem Querträger (106a, 106b) angebracht ist.

6. Transportvorrichtung nach einem der vorhergehenden Ansprüche,
wobei eine Position der wenigstens einen Antriebseinheit (110a, 110b, 112a, 112b) in Höhenrichtung (H) der Transportvorrichtung (100) mittels eines Einstellelements (116), vorzugsweise mittels eines Einlegeblechs, einstellbar ist.

7. Transportvorrichtung nach einem der vorhergehenden Ansprüche,
wobei die Lastantriebseinrichtung (108) als eine hydraulische Lastantriebseinrichtung ausgebildet ist, welche dazu eingerichtet ist, die wenigstens eine Antriebseinheit (110a, 110b, 112a, 112b), vorzugsweise mittels einer Hydraulikpumpe (130), hydraulisch anzutreiben,
wobei weiter vorzugsweise die hydraulische Lastantriebseinrichtung ferner ein 4-fach-Proportionalventil und/oder einen hydraulischen Mengenteiler und/oder eine 4-fach-Pumpe umfasst.

8. Transportvorrichtung nach einem der vorhergehenden Ansprüche,
ferner umfassend eine Stützenanordnung (122), welche dazu eingerichtet ist, abnehmbar an dem Tragrahmen (102) angebracht zu sein und sich auf einem Untergrund (UG) unterhalb der Transportvorrichtung (100) abzustützen.

9. Transportvorrichtung nach Anspruch 8,
wobei die Stützenanordnung (122) als eine hydraulisch betätigbare Stützenanordnung ausgebildet ist,
wobei die Stützenanordnung (122) vorzugsweise dazu eingerichtet ist, von der gleichen Hydraulikpumpe (130) wie die Lastantriebseinrichtung (108) angetrieben zu werden, und/oder
wobei die Stützenanordnung (122) vorzugsweise dazu eingerichtet ist, von einer weiteren Hydraulikpumpe angetrieben zu werden, und vorzugsweise ferner ein weiteres 4-fach-Proportionalventil und/oder einen weiteren hydraulischen Mengenteiler und/oder eine weitere 4-fach-Pumpe umfasst.

10. Transportvorrichtung nach einem der vorhergehenden Ansprüche,
wobei die im Wesentlichen rotationssymmetrische Last (K) eine Kabeltrommel ist, welche dazu ausgebildet und bestimmt ist, ein Kabel aufzunehmen, welches vorzugsweise mittels der Lastantriebseinrichtung (108) von der Kabeltrommel abwickelbar und/oder auf die Kabeltrommel aufwickelbar ist.

11. Transportvorrichtung nach einem der vorhergehenden Ansprüche,
ferner umfassend eine Ladungssicherungseinrichtung (132), insbesondere einen Ladungssicherungsbock, welcher an dem Tragrahmen (102) angebracht ist, und dazu eingerichtet ist, die Last (K) an dem Tragrahmen (102), insbesondere in Längsrichtung (L), zu sichern.

12. Transportvorrichtung nach einem der vorhergehenden Ansprüche,
wobei die vorbestimmte feste Breite (B) der Transportvorrichtung (100) höchstens etwa 3 m beträgt, und/oder
wobei ein Lastdurchmesser (D) der im Wesentlichen rotationssymmetrischen Last höchstens etwa 4,50 m, insbesondere höchstens etwa 4,30 m, beträgt, und/oder
wobei ein Antriebseinheitsdurchmesser (d) der wenigstens einen Antriebseinheit (110a, 110b, 112a, 112b), insbesondere der Antriebsrolle, höchstens etwa 230 mm beträgt.

13. Transportvorrichtung nach einem der vorhergehenden Ansprüche,
wobei ein Leergewicht der Transportvorrichtung (100) ohne Last (K) höchstens etwa 10 t, vorzugsweise höchstens etwa 7 t, beträgt, und/oder
wobei die Last (K) ein Gewicht von mindestens 50 t, beispielsweise etwa 60 t, insbesondere von mindestens 90 t, beispielsweise etwa 95 t, und/oder höchstens 100 t aufweist.

14. Schwerlastfahrzeug (200), umfassend eine Transportvorrichtung (100) nach einem der vorhergehenden Ansprüche.

15. Schwerlastfahrzeug nach Anspruch 14, umfassend ein vorderes Teilfahrzeug (202) und ein hinteres Teilfahrzeug (204), wobei die Transportvorrichtung (100) dazu eingerichtet ist,
zwischen dem vorderen Teilfahrzeug (202) und dem hinteren Teilfahrzeug (204) angeordnet zu sein, und/oder
auf einer Ladefläche (F) des vorderen Teilfahrzeugs (202) und/oder des hinteren Teilfahrzeugs (204) angeordnet zu sein,
wobei das vordere Teilfahrzeug (204) vorzugsweise einen Schwanenhals (206) umfasst.

## Claims

1. Transport device (100) designed and intended to receive a substantially rotationally symmetrical, in particular cylindrical, load (K), said transport device comprising:
a support frame (102) designed to receive the load (K) at a circumference (U) thereof, wherein the support frame (102) comprises at least two spaced-apart longitudinal beams (104a, 104b) as well as at least two spaced-apart transverse beams (106a, 106b), which extend substantially orthogonally to the longitudinal beams (104a, 104b), and
a load drive device (108) attached to the support frame (102), which is designed to drive the load (K) at its circumference (U) so as to execute a rotational movement in the circumferential direction (R) relative to the support frame (102),
wherein the transport device (100) has a predetermined fixed length (L) as well as a predetermined fixed width (B), and at least one drive unit (110a, 110b, 112a, 112b) of the load drive device (108) is arranged on an inner side and/or an upper side of at least one of the longitudinal beams (104a, 104b) and/or the transverse beams (106a, 106b),
**characterised in that**
the transport device (100) comprises a coupling device at both longitudinal ends, which is designed to be coupled to a front chassis or a rear chassis of a heavy-duty vehicle.

2. Transport device according to claim 1,
wherein each longitudinal beam (104a, 104b) and/or each transverse beam (106a, 106b) is free of separating points.

3. Transport device according to any one of the preceding claims,
wherein the at least one drive unit (110a, 110b, 112a, 112b) is designed as a drive roller, which is preferably designed and intended to be brought into frictional engagement with the circumference (U) of the load (K).

4. Transport device according to any one of the preceding claims,
wherein a material of the at least one drive unit (110a, 110b, 112a, 112b) has a higher hardness than a material of a section of the load (K) that is intended to contact the drive unit (110a, 110b, 112a, 112b) when the transport device (100) is in use.

5. Transport device according to any one of the preceding claims,
wherein the at least one drive unit (110a, 110b, 112a, 112b) is slidably mounted on the longitudinal beam (104a, 104b) and/or on the transverse beam (106a, 106b) in the longitudinal direction (L) and/or in the transverse direction (B) of the transport device (100).

6. Transport device according to any one of the preceding claims,
wherein a position of the at least one drive unit (110a, 110b, 112a, 112b) in the height direction (H) of the transport device (100) is adjustable by means of an adjusting element (116), preferably by means of an insert plate.

7. Transport device according to any one of the preceding claims,
wherein the load drive device (108) is designed as a hydraulic load drive device configured to hydraulically drive the at least one drive unit (110a, 110b, 112a, 112b), preferably by means of a hydraulic pump (130),
wherein preferably the hydraulic load drive device furthermore comprises a 4-way proportional valve and/or a hydraulic flow divider and/or a 4-way pump.

8. Transport device according to one of the preceding claims,
further comprising a support arrangement (122) which is designed to be detachably mounted on the support frame (102) and to rest on a subsurface (UG) below the transport device (100).

9. Transport device according to claim 8,
wherein the support arrangement (122) is designed as a hydraulically actuated support arrangement,
wherein the support arrangement (122) is preferably configured to be driven by the same hydraulic pump (130) as the load drive device (108), and/or
wherein the support arrangement (122) is preferably configured to be driven by a further hydraulic pump, and preferably also comprises a further 4-way proportional valve and/or a further hydraulic flow divider and/or a further 4-way pump.

10. Transport device according to any one of the preceding claims,
wherein the substantially rotationally symmetric load (K) is a cable drum designed and intended to receive a cable which can preferably be unwound from the cable drum and/or wound onto the cable drum by means of the load drive device (108).

11. Transport device according to any one of the preceding claims,
further comprising a load securing device (132), in particular a load securing support mounted on the support frame (102) and designed to secure the load (K) on the support frame (102), in particular in the longitudinal direction (L).

12. Transport device according to any one of the preceding claims,
wherein the predetermined fixed width (B) of the transport device (100) is at most approximately 3 m, and/or
wherein a load diameter (D) of the substantially rotationally symmetrical load is at most approximately 4.50 m, in particular at most approximately 4.30 m, and/or
wherein a drive unit diameter (d) of the at least one drive unit (110a, 110b, 112a, 112b), in particular the drive roller, is at most approximately 230 mm.

13. Transport device according to any one of the preceding claims,
wherein the tare weight of the transport device (100) without the load (K) is at most approximately 10 t, preferably at most approximately 7 t, and/or
wherein the load (K) has a weight of at least 50 t, for example approximately 60 t, in particular at least 90 t, for example approximately 95 t, and/or at most 100 t.

14. Heavy-duty vehicle (200), comprising a transport device (100) according to any one of the preceding claims.

15. Heavy-duty vehicle according to claim 14, comprising a vehicle front part (202) and a vehicle rear part (204), wherein the transport device (100) is designed to be
arranged between the vehicle front part (202) and the vehicle rear part (204), and/or
arranged on a loading platform (F) of the vehicle front part (202) and/or the vehicle rear part (204),
wherein the vehicle front part (204) preferably comprises a swan neck (206).

## Revendications

1. Dispositif de transport (100) conçu et adapté pour recevoir une charge (K) sensiblement à symétrie de révolution, en particulier cylindrique, le dispositif de transport (100) comprenant
un cadre porteur (102) agencé pour recevoir la charge (K) au niveau de son pourtour (U), le cadre porteur (102) comprenant au moins deux longerons (104a, 104b) espacés l'un de l'autre ainsi qu'au moins deux traverses (106a, 106b) espacées l'une de l'autre et s'étendant sensiblement orthogonalement aux longerons (104a, 104b), et
un dispositif d'entraînement de charge (108) monté sur le cadre porteur (102), qui est conçu pour entraîner la charge (K) au niveau de son pourtour (U) afin d'effectuer un mouvement de rotation dans le sens périphérique (R) par rapport au cadre porteur (102),
le dispositif de transport (100) présentant une longueur fixe prédéterminée (L) ainsi qu'une largeur fixe prédéterminée (B), et au moins une unité d'entraînement (110a, 110b, 112a, 112b) du dispositif d'entraînement de charge (108) étant disposée sur une face intérieure et/ou une face supérieure de l'un au moins des longerons (104a, 104b) et/ou des traverses (106a, 106b),
**caractérisé en ce que**
le dispositif de transport (100) comprend, aux deux extrémités longitudinales, un dispositif d'accouplement qui est conçu pour être couplé à un châssis avant ou à un châssis arrière d'un véhicule poids lourd.

2. Dispositif de transport selon la revendication 1,
dans lequel chaque longeron (104a, 104b) et/ou chaque traverse (106a, 106b) est exempt(e) de points de séparation.

3. Dispositif de transport selon l'une des revendications précédentes,
dans lequel ladite au moins une unité d'entraînement (110a, 110b, 112a, 112b) est conçue comme un rouleau d'entraînement qui est de préférence conçu et adapté pour être mis en prise par frottement avec le pourtour (U) de la charge (K).

4. Dispositif de transport selon l'une des revendications précédentes,
dans lequel un matériau de ladite au moins une unité d'entraînement (110a, 110b, 112a, 112b) présente une dureté supérieure à celle d'un matériau d'une partie de la charge (K) qui est destinée à entrer en contact avec l'unité d'entraînement (110a, 110b, 112a, 112b) lors de l'utilisation du dispositif de transport (100).

5. Dispositif de transport selon l'une des revendications précédentes,
dans lequel ladite au moins une unité d'entraînement (110a, 110b, 112a, 112b) est montée de manière coulissante sur le longeron (104a, 104b) et/ou la traverse (106a, 106b) dans le sens de la longueur (L) et/ou dans le sens de la largeur (B) du dispositif de transport (100).

6. Dispositif de transport selon l'une des revendications précédentes,
dans lequel une position de ladite au moins une unité d'entraînement (110a, 110b, 112a, 112b) dans le sens de la hauteur (H) du dispositif de transport (100) peut être réglée au moyen d'un élément de réglage (116), de préférence au moyen d'une tôle d'insertion.

7. Dispositif de transport selon l'une des revendications précédentes,
dans lequel le dispositif d'entraînement de charge (108) est conçu comme un dispositif d'entraînement de charge hydraulique qui est agencé pour entraîner hydrauliquement ladite au moins une unité d'entraînement (110a, 110b, 112a, 112b), de préférence au moyen d'une pompe hydraulique (130), de préférence, le dispositif d'entraînement de charge hydraulique comprend en outre une vanne proportionnelle à 4 voies et/ou un diviseur de débit hydraulique et/ou une pompe à 4 voies.

8. Dispositif de transport selon l'une des revendications précédentes,
comprenant en outre un ensemble d'appui (122) qui est conçu pour être monté de manière amovible sur le cadre porteur (102) et pour s'appuyer sur un sol (UG) situé sous le dispositif de transport (100).

9. Dispositif de transport selon la revendication 8,
dans lequel l'ensemble d'appui (122) est conçu comme un ensemble d'appui à commande hydraulique,
de préférence, l'ensemble d'appui (122) est conçu pour être entraîné par la même pompe hydraulique (130) que le dispositif d'entraînement de charge (108), et/ou
de préférence, l'ensemble d'appui (122) est conçu pour être entraîné par une autre pompe hydraulique et comprend de préférence en outre une autre vanne proportionnelle à 4 voies et/ou un autre diviseur de débit hydraulique et/ou une autre pompe à 4 voies.

10. Dispositif de transport selon l'une des revendications précédentes,
dans lequel la charge (K) sensiblement à symétrie de révolution est un tambour à câble qui est conçu et adapté pour recevoir un câble qui peut être déroulé et/ou enroulé sur le tambour à câble, de préférence au moyen du dispositif d'entraînement de charge (108).

11. Dispositif de transport selon l'une des revendications précédentes,
comprenant en outre un dispositif de sécurisation de la charge (132), en particulier un support de sécurisation de la charge, qui est monté sur le cadre porteur (102) et est conçu pour sécuriser la charge (K) sur le cadre porteur (102), en particulier dans le sens de la longueur (L).

12. Dispositif de transport selon l'une des revendications précédentes,
dans lequel la largeur fixe prédéterminée (B) du dispositif de transport (100) est au maximum d'environ 3 m, et/ou
le diamètre (D) de la charge sensiblement à symétrie de révolution est au maximum d'environ 4,50 m, en particulier au maximum d'environ 4,30 m, et/ou
le diamètre (d) de ladite au moins une unité d'entraînement (110a, 110b, 112a, 112b), en particulier du rouleau d'entraînement, est au maximum d'environ 230 mm.

13. Dispositif de transport selon l'une des revendications précédentes,
dans lequel le poids à vide du dispositif de transport (100) sans charge (K) est au maximum d'environ 10 t, de préférence au maximum d'environ 7 t, et/ou
la charge (K) a un poids d'au moins 50 t, par exemple d'environ 60 t, en particulier d'au moins 90 t, par exemple d'environ 95 t, et/ou au maximum de 100 t.

14. Véhicule poids lourd (200) comprenant un dispositif de transport (100) selon l'une des revendications précédentes.

15. Véhicule poids lourd selon la revendication 14,
comprenant une partie de véhicule avant (202) et une partie de véhicule arrière (204), le dispositif de transport (100) étant conçu pour
être disposé entre la partie de véhicule avant (202) et la partie de véhicule arrière (204), et/ou
être disposé sur une surface de chargement (F) de la partie de véhicule avant (202) et/ou de la partie de véhicule arrière (204),
la partie de véhicule avant (204) comprenant de préférence un col de cygne (206).
